# EUROPEAN PATENT APPLICATION

(11) **EP 1 375 846 A1**
(43) Date of publication of application: **02.01.2004**
(21) Application number: 03013798.8
(22) Date of filing: 18.06.2003
(51) Int. Cl.: F01L 9/04, H01L 41/09, F16K 31/00

(54) **Piezoelectric valve actuation**

(30) Priority: 18.06.2002 US 389463 P
(71) Applicant: TECUMSEH PRODUCTS COMPANY, Tecumseh Michigan 49286 (US)
(72) Inventor: Gatecliff, George W., Saline, Michigan 48176 (US); Brower, Daid R., Beaver Dam, Wisconsin 53916 (US); Rado, Gordon E., Plymouth, Wisconsin 53073 (US); Novak, Keith A., Depere, Wisconsin 54115 (US)
(74) Representative: Pietruk, Claus Peter, Dipl.-Phys.

(57) **Abstract**

A piezoelectric valve actuation system for an internal combustion engine (10) includes a piezoelectric driver (40, 65, 85) in the form of a pre-stressed wafer or strip including a layer (43) of piezoceramic material such as lead zirconate titanate (PZT). The driver (40, 65, 85) has a central portion which includes an aperture (44) for direct engagement with a valve stem (32) so that the valve (30) is moved between open and closed positions directly by the piezoelectric driver. The piezoelectric driver (40, 65, 85) can have end portions (42) which attach to the engine cylinder head (12) proximate the valve location. The piezoelectric actuator (40, 65, 85) is driven by an electronic control module (ECM) (50) providing electrical signals to control valve operation based various engine parameters along with user input.

## Description

The present invention relates to a valve actuation system; and in particular, to a piezoelectric valve actuation system in an internal combustion engine.

Valve systems in internal combustion engines are typically driven from a camshaft either directly or through a mechanical linkage. The valves of the system are preloaded in a closed position by a valve spring with the cam opening the valve against the force of the spring. Valve movement, in terms of lift and duration, is determined by the cam profile such that rotation of camshaft actuates the valves. The camshaft is indexed with respect to the engine crank shaft so that valve timing relative to the engine crank shaft rotation is predetermined.

In mechanically actuated systems, valve operation influences several engine characteristics such as horsepower, torque, fuel economy and emissions. Most often, the designer must make compromises such as having less than optimum horsepower or torque to achieve acceptable performance throughout the engine's operating range from engine idle to maximum speed.

It has been recognized in the prior art that advantages can be achieved by the development of an actuation mechanism that is not controlled by engine camshaft position. A valve system of this type would have the potential for providing infinitely variable valve timing. Efforts have been made to develop electromagnetic or solenoid actuated systems, however, with limited effectiveness due to the bulk and complexity of these systems combined with relatively high current requirements for such applications.

In a further effort, piezoelectric materials have been used in valve actuation mechanisms. U.S. Patent No. 4,593,658 to Moloney discloses a valve actuation system that uses a piezoelectric device including a stack of piezoelectric discs or rings to actuate the valve. One end of the piezoelectric stack is fixed to a housing while the other end is freely movable. A pin attached to the movable end of the piezoelectric stack engages a lever pivoted on a carrier mounted to the engine block. The lever is connected to an actuator rod of the valve for operation thereof. Such actuators, however, are bulky and rather expensive due to the number of piezoelectric elements required to form the piezoelectric stack. These actuators also require a linkage, such as the lever and actuator arms of Moloney, to operate the valve.

What is needed is a simple, economical, and compact piezoelectric valve actuator capable of directly operating a valve in an internal combustion engine without the need of a lever or linkage mechanism.

The present invention provides a piezoelectric valve actuation system for an internal combustion engine. A piezoelectric drive member is directly connected to the valve stem of the valves such that the drive member directly drives the valves toward both open and closed positions. This eliminates the need for a return spring to bring the valve back to a closed position once it has been opened. The curved, pre-stressed piezoelectric drive member has a central portion operatively coupled to the valve of the engine and a peripheral portion captively engaged by a portion of the engine proximate the valve. The ends of the piezoelectric drive member may be pivotally mounted in the cylinder block of the engine. The piezoelectric drive member may include a keyhole shaped aperture that engages a retaining groove formed near one end of the valve stem.

In one embodiment, the cylinder head of the engine is provided with retaining grooves in which the ends of a substantially rectangular piezoelectric drive member are received. The piezoelectric drive member then opens and closes the valve in response to electrical signals from an electronic control module (ECM).

In another embodiment, the cylinder head is provided with a pair of mounting pins located on opposite sides of the valve. The ends of the substantially rectangular piezoelectric drive member are rolled to receive pins and pivotally mount the drive member.

In a further embodiment, the piezoelectric drive member is substantially disk shaped. Portions of the peripheral edge of the drive member are received in grooved formed in retaining posts secured to the cylinder block to pivotally mount the drive member.

One form of the present invention provides a piezoelectric valve actuation mechanism for an internal combustion engine having at least one valve with a valve stem. The actuation mechanism includes a curved, pre-stressed piezoelectric drive member having a central portion operatively coupled to the valve of the engine and a peripheral portion captively engaged by a portion of the engine proximate the valve. A controller input is provided for exciting the drive member such that the valve moves between an open position and a closed position based on a predetermined set of engine operating parameters and user input.

Another form of the present invention provides an actuator for a valve having a valve stem. The actuator includes a drive member including a curved, pre-stressed wafer having at least one layer of piezoceramic material. The wafer has an aperture in a central portion thereof is configured for direct attachment to the valve stem whereby the valve is moved between an open position and a closed position by the drive member.

A further form of the present invention provides an internal combustion engine having a block portion defining at least one cylinder and at least one cylinder head attached to the block portion. At least one combustion chamber is defined in the at least one cylinder with the cylinder head supporting at least two valves for the at least one cylinders. An actuation mechanism is provided for operating the valves between an open position and a closed position. The actuation mechanism includes a curved, pre-stressed piezoelectric drive member for each of the valves. The piezoelectric drive member has a central portion thereof operatively coupled to a respective one of the valves. A controller input excites the actuation mechanism such that the valve moves between the open position and the closed position based on a predetermined set of engine operating parameters and user input.

The present invention accomplishes a major objective of providing a valve actuation system having infinitely variable valve timing combined with variable valve lift over a predetermined range under control of the piezoelectric actuator. The present invention also enables bidirectional operation of the engine.

The invention accomplishes a further objective of providing engine braking through valve control. The invention accomplishes yet a further objective of eliminating the requirement for periodic valve adjustments.

The invention accomplishes still a further objective of eliminating a valve train and thus the eliminating cooling air obstructions particularly in air cooled engines.

The invention accomplishes a still further objective of providing a piezoelectric valve actuation system that operates with minimum power consumption.

The above mentioned and other features and objects of this invention, and the manner of obtaining them, will become more apparent and the invention itself will be better understood by reference to the following description of the embodiments of the invention taken in conjunction with the accompanying drawings, wherein:
Figure 1 is a front sectional view of one embodiment of a piezoelectric valve actuation system according to the present invention mounted on an engine;
Figure 2 is a top view of a portion of the piezoelectric actuator of Figure 1 showing a keyhole shaped aperture for engagement with a valve stem;
Figure 3 is a front sectional view of a piezoelectric valve actuator according to the present invention showing an alternate mounting of the actuator to the engine;
Figure 4 is a top view of a disk shaped piezoelectric valve actuator according to the present invention showing a still further mounting technique; and
Figure 5 is a front sectional view of the disk shaped piezoelectric actuator of Figure 4.

Corresponding reference characters indicate corresponding parts throughout the several views. The exemplification set out herein illustrates embodiments of the invention and such exemplification is not to be construed as limiting the scope of the invention in any manner.

For the purposes of promoting an understanding of the principles of the invention, reference will now be made to the embodiments illustrated in the drawings and specific language will be used to describe the same. It will nevertheless be understood that no limitation of the scope of the invention is thereby intended. The invention includes any alterations and further modifications of the illustrated devices and described methods and further applications of the principles of the invention which would normally occur to one skilled in the art to which the invention relates.

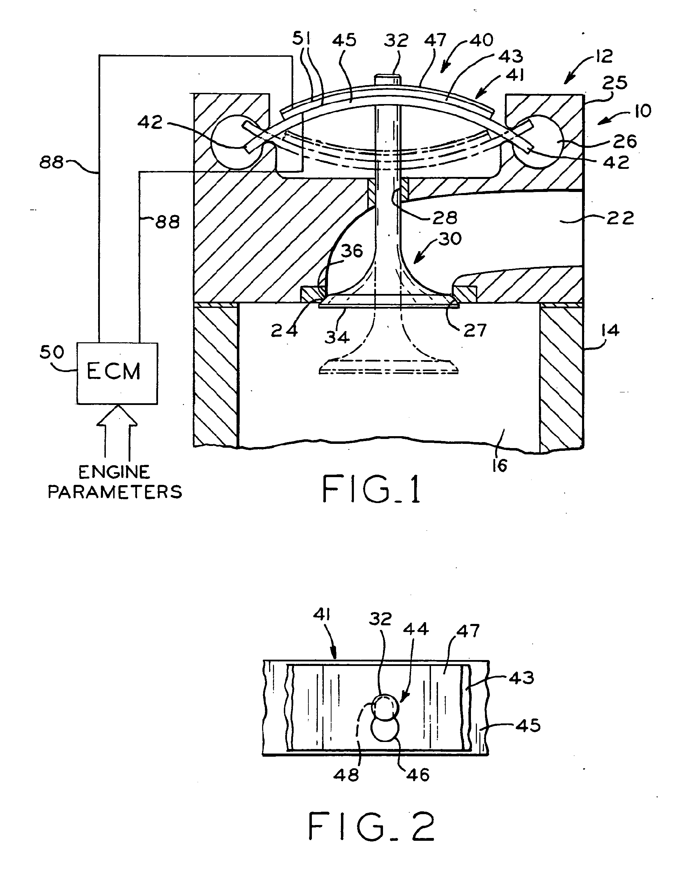

Referring to Figure 1, an internal combustion engine is generally represented at 10. Engine 10 may be a two or four-stroke engine, the general operation of which is described in U.S. Patent No. 4,982,705, which is assigned to the assignee of the present invention, the disclosure of which is hereby incorporated herein by reference. The engine includes a cylinder head 12 and block 14 with a combustion chamber generally indicated at 16. Cylinder head 12 includes a number of ports 22 including at least one intake port delivering an air fuel mix to the engine's combustion chamber 16 and at least one exhaust port through which exhaust gases exit the combustion chamber 16, with intake and exhaust ports generally present in equal numbers. A valve seat 24 is located at the entry of each port 22 into the combustion chamber 16. The valve seat 24 may be machined to have a beveled profile 27. A valve 30 has a valve stem 32 that extends through a valve guide 28 formed in the cylinder head 12. The valve 30 has a head portion 34 that may include a beveled edge 36 machined to have a profile complimentary to profile 27 of the valve seat 24. The engagement of beveled edge 36 with valve seat 24 when the valve 30 is in a closed position acts to seal combustion chamber 16.

A piezoelectric actuator, or driver, 40 is provided to operate the valve 30. One piezoelectric actuator particularly suitable for use with the present invention is of a design that is sold under the trademark THUNDER and is commercially available through Face International Corporation of Norfolk, Virginia. The actuator is a layered ferroelectric composite, the technology of which is described in U.S. Patent Nos. 5,632,841 and 5,639,850, both of which are assigned to the United States of America as represented by the Administrator of the National Aeronautics and Space Administration (NASA), and the disclosures of which are hereby incorporated by reference. The devices are further described in the publication "THUNDER White Paper", Face International Corporation, February 21 2001, the disclosure of which is also hereby incorporated herein by reference.

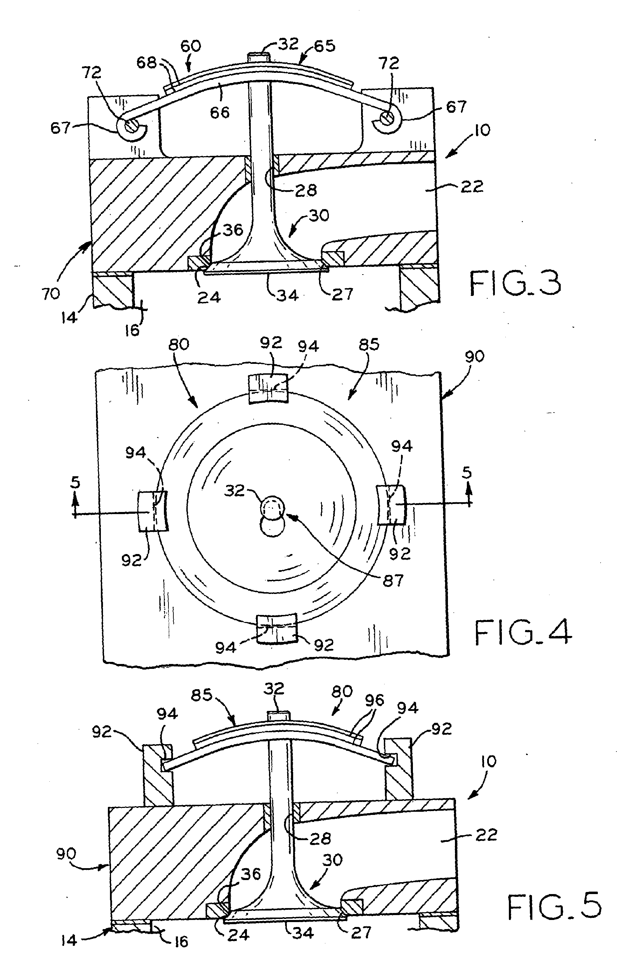

Actuators such as the THUNDER actuator are low cost, high efficiency piezoelectric devices having improved piezoelectric characteristics including improved mechanical output. The actuator has a piezoceramic layer 43 of a material such as lead zirconate titanate (PZT) sandwiched and bonded between a stainless steel lower layer 45 and an aluminum upper layer 47. The actuator is pre-stressed which gives it a characteristic curve or bend which can be observed in Figures 1 and 3. When a voltage is applied to piezoelectric actuator 40, the actuator responds by changing its curvature and/or direction of concavity depending on the magnitude and polarity of the applied voltage. The changes in curvature, illustrated in ghost outline in Figure 1, produces a reciprocating action which actuates valve 30.

In one embodiment of the invention, the piezoelectric actuator 40 is a substantially rectangular strip (Figure 2). The actuator includes a drive member 41 and end portions 42- which are secured for pivotal motion in retaining grooves 26 formed in a pair of posts 25 integrally formed with engine cylinder head 12. This arrangement provides for better lubrication because oil can enter grooves 26 and lubricate the sliding surfaces. Furthermore, no fasteners are required and the arrangement is more tolerant of manufacturing processes. Alternatively, the retaining post may be in the form of an annular wall encircling the valve stem 12 and containing a single, continuous retaining groove.

The valve stem 32 of valve 30 is directly connected to the piezoelectric drive member 41 by any suitable manner to open and close the valve 30 by direct actuation, thus eliminating the need for valve return springs to return the valve 30 to its closed position. One method of securing valve 30 to piezoelectric drive member 41 is to provide the drive member with a keyhole shaped opening or aperture 44. The keyhole shaped aperture 44 includes an enlarged, off-centered opening 46 having a diameter larger than the diameter of the valve stem 32. Opening 46 is connected to a smaller opening 48 centered in the drive member 41 and has a diameter substantially equal to the diameter of a retaining groove (not shown) formed about the circumference of the valve stem 32 and sized for engagement with the groove. The end of the valve stem 32 is received through the opening 46 until the retaining groove 38 aligns with the smaller opening 48. The valve 30 is slid toward the smaller opening 48 until the piezoelectric drive member 41 engages the retaining groove 38.

The valve 30 is constrained laterally by the valve guide 28, only permitting travel of the valve 30 longitudinally along the longitudinal axis of the valve stem 32. The movement of the valve from a closed position to an open position is indicated by the ghost outline in Figure 1. It is required that the longitudinal axis of the valve stem 32 be aligned with the central axis of the smaller opening 48 in the piezoelectric drive member 41 so that the motion of the actuator facilitates movement of the valve along the longitudinal axis of the valve stem 32. If the axes of the valve stem 32 and the smaller opening 48 are not aligned, linear movement of the valve 30 may be hindered.

Referring to Figure 1, in operation, the piezoelectric valve actuator is electronically controlled, for example, by a computer or an electronic control module (ECM), generally represented at 50. The ECM 50 gathers information of selected engine operating parameters and, along with user input, controls valve operation through electrical connectors 88. Electrical connectors 88 are electrically connected to the valve 30 at 51 to supply control signals to the valve and facilitate opening and closing movement thereof.

Turning now to Figure 3, a second embodiment of a piezoelectric valve actuation system is shown. In this embodiment, a piezoelectric valve actuator 60 includes a piezoelectric drive member 65 having layers similar to those of drive member 41 described previously. However, the stainless steel layer 66 of drive member 65 is different from stainless steel layer 45 being provided with rolled ends 67. In this embodiment, cylinder head 70 is provided with a pair of mounting pins 72 located on each side of the valve stem 32 to which the rolled ends 67 of piezoelectric drive member 65 are pivotally attached. Operation of this actuator is identical to that of the embodiment previously described with electrical connections at 68 receiving signals from the ECM 50 via electrical connectors.

An additional embodiment of the piezoelectric valve actuation system is shown in Figures 4 and 5. In this embodiment, a piezoelectric valve actuator 80 includes a disk shaped piezoelectric drive member 85 formed from a plurality of layers similar to those of drive member 41 described previously. The cylinder head 90 includes a plurality of retaining posts 92, each including a retaining groove 94 in which a portion of the periphery of the piezoelectric drive member 85 is received. At least four retaining posts 92 are provided as shown in Figure 4, however any suitable number of retaining posts 92 may be used to mount drive member 85 to the cylinder head 90. Alternatively, the retaining posts could be replaced with an annular retaining wall completely encircling the valve stem and containing a single, continuous retaining groove. Piezoelectric drive member 85 includes a centrally located keyhole shaped aperture 87 for engagement with a valve stem 32 as previously described. The piezoelectric drive member 85 is electrically connected at 96 to ECM 50 via electrical connectors which receive signals from the ECM 50 for operation of the drive member in the same manner described above.

The valve actuation system of the present invention provides infinitely variable valve timing giving the ability to continuously change gas flow characteristics of an engine based on feedback from various engine sub-systems along with operator input. Valve lift could also be varied over a predetermined range. Additionally, the valves could also be left partially open during engine startup thereby reducing the required size of starter motors and batteries.

Other benefits deriving from the piezoelectric valve actuator of the present invention include the provision of engine braking through valve control and the lack of a requirement for periodic valve adjustment. Also, the operation of individual cylinders in a multicylinder engine could be suspended by closing selected valves to improve fuel economy when full power is not required. In addition, the valve actuation system of the present invention provides the capability to effect combustion chamber turbulence based on the use of additional tangential flow intake valves.

As a further benefit of the present invention, the elimination of the valve train simplifies engine mechanics and eliminates cooling air obstructions, particularly for air cooled engines. In addition, adding layers to the actuator which could generate power back into the system when the valve direction is reversed could minimize power consumption.

While this invention has been described as having an exemplary structure, the present invention can be further modified within the spirit and scope of this disclosure. This application is therefore intended to cover any variations, uses or adaptations of the invention using its general principles. Further, this application is intended to cover such departures from the present disclosure as come within known or customary practice in the art to which this invention pertains and which fall within the limits of the appended claims.

## Claims

1. A piezoelectric actuated valve mechanism for an internal combustion engine (10) having at least one valve (30) with a valve stem (32), the valve mechanism **characterized by** a curved, pre-stressed piezoelectric drive member (40, 65, 85) having a central portion operatively coupled to the valve (30) of the engine (10) and a peripheral portion captively engaged by a portion of the engine (10) proximate the valve (30), and a controller input (50) for exciting said drive member (40, 65, 85), whereby the valve (30) moves between an open position and a closed position based on a predetermined set of engine operating parameters and user input

2. The mechanism of claim 1 **characterized in that** said central portion of said drive member (40, 65, 85) defines an aperture (44) in engagement with the valve stem (32).

3. The mechanism of claim 2 **characterized in that** said aperture (44) is keyhole shaped and includes a first portion (46) that receives the valve stem (32) therethrough, and a second portion (48), smaller than said first portion, configured to receive a reduced diameter of a retaining groove (38) in the valve stem (32).

4. The mechanism of claim 1 **characterized in that** said peripheral portion of said drive member (40, 65) includes first and second opposite ends (42).

5. The mechanism of claim 4 **characterized in that** said ends (42) are planar in shape, the engaging portion of the engine (10) further including at least one retaining groove (26) captively engaging said ends (42).

6. The mechanism of claim 4 **characterized in that** said ends (42) are rolled, the engaging portion of the engine (10) further including a pair of mounting pins (72) receivable in a respective one of said rolled ends (67).

7. The mechanism of claim 1 **characterized in that** said peripheral portion of said drive member (85) is circular in shape, the engaging portion of the engine (10) further including at least one retaining groove (94) captively engaging said circular peripheral portion.

8. The mechanism of claim 1 **characterized in that** said drive member (40, 65, 85) includes at least one layer of a piezoceramic material (43).

9. The mechanism of claim 8 **characterized in that** said piezoceramic material (43) is lead zirconate titanate (PZT).
